# EUROPÄISCHE PATENTSCHRIFT

(11) **EP 1 211 283 B1**
(45) Veröffentlichungstag und Bekanntmachung des Hinweises auf die Patenterteilung: **19.01.2005**
(21) Anmeldenummer: 01127926.2
(22) Anmeldetag: 23.11.2001
(51) Int. Cl.: C08K 9/04, C08L 21/00

(54) **Kautschukmischung mit expandiertem Schichtsilikat**
Rubber mix comprising layered expanded silicate
Mélange de caoutchouc comprenant un silicate à couches expansées

(30) Priorität: 29.11.2000 DE 10059236
(43) Veröffentlichungstag der Anmeldung: 05.06.2002
(73) Patentinhaber: Continental Aktiengesellschaft, 30165 Hannover (DE)
(72) Erfinder: Heinrich, Gert, Dr., 30163 Hannover (DE); Herrmann, Wolfram, Dr., 31515 Wunstorf (DE); Kendziorra, Norbert, 30827 Garbsen (DE); Pietag, Thomas, 31655 Stadthagen (DE); Recker, Carla, Dr., 30165 Hannover (DE)

(56) Entgegenhaltungen:
- DE-A- 3 806 548
- US-A- 2 531 396
- US-A- 2 886 550
- DATABASE WPI Section Ch, Week 199847 Derwent Publications Ltd., London, GB; Class A12, AN 1998-551232 XP002194757 & JP 10 245453 A (TOYOTA CHUO KENKYUSHO KK), 14. September 1998 (1998-09-14)

## Beschreibung

Die Erfindung betrifft die Verwendung zumindest eines Schichtsilikates in mit Schwefel vulkanisierten Kautschukmischungen, die zumindest einen Dienkautschuk, zumindest einen Füllstoff, Weichmacher und weitere übliche Zusatzstoffe enthalten.

Kautschukmischungen für Reifenlaufstreifen werden verschiedenste Füllstoffe, wie z. B. Ruß, Kieselsäure, Alumosilikate, Kaoline, Metalloxide oder Kreide, zugesetzt. Die Füllstoffe tragen dabei nicht nur zur Verbilligung der Kautschukmischungen bei, sondern beeinflussen durch ihre spezifische Wirkung auf den Kautschuk auch die Eigenschaften der unvulkanisierten Kautschukmischung und der daraus hergestellten Reifen. Aktive Füllstoffe, auch verstärkende Füllstoffe genannt, zu denen die meisten Ruße, Kieselsäure und die meisten feinteiligen Silikate zählen, verbessern im Allgemeinen eine Reihe von Vulkanisateigenschaften, wie Festigkeit, Spannungswert (Modul) und Einreißwiderstand, während andere Eigenschaften, wie Reißdehnung und Rückprallelastizität, negativ beeinflusst werden. Die Aktivität des Füllstoffes ist dabei abhängig von der Teilchengröße, der spezifischen Oberfläche, der geometrischen Gestalt der Oberfläche und der chemischen Zusammensetzung.

In der Vergangenheit wurden die bekannten Füllstoffe in mannigfaltiger Weise untersucht, verändert und modifiziert, um die Eigenschaften von Reifen, die diese Füllstoffe enthalten, zu optimieren. Außerdem wurden in diesem Zusammenhang neue Füllstoffklassen erschlossen.

Die Schichtsilikate bilden eine dieser Füllstoffklassen, wobei sich bei Schichtsilikaten das Problem ergibt, dass die Schichtsilikate aufgrund ihrer polaren Oberfläche nicht mit herkömmlichen Kautschuken kompatibel sind. D. h., man muss sie vor der Einbringung in eine Kautschukmischung so modifizieren, dass sie organophil und mit der umgebenden Kautschukmatrix kompatibel sind. Das Schichtsilikat lässt sich nur dann gut in der Kautschukmatrix verteilen. Um dies zu erreichen, ist es seit langem bekannt, die normalerweise hydrophile Oberfläche der Schichtsilikate durch Kationenaustausch mit Alkylammoniumionen so zu modifizieren, dass sie organophil wird. Die einzelnen organisch modifizerten Schichten sind dann parallel übereinander angeordnet und bilden kleine Stapel, in denen sich organische und anorganische Schichten regelmäßig abwechseln.

Einen Überblick über Nanocomposite auf Basis von Polymeren und Schichtsilikaten, ihre Herstellung, Charakterisierung und Verwendung findet man z. B. in dem Artikel Polymer layered silicate naonocomposites" von M. Zanetti, S. Lomakin und G. Camino in Macromol. Mater. Eng. 279, S. 1 - 9, (2000).
Für die Herstellung von Nanocompositen auf Basis von Polymeren und Schichtsilikaten werden dort vier Verfahren vorgestellt: die In-situ-Polymerisation, die Einlagerung (Intercalation) des Polmers aus einer Lösung, die direkte Einlagerung von geschmolzenem Polymer und die Sol/Gel-Technologie. Diese Verfahren führen dazu, dass die einzelnen Schichten des Silikates aufgeweitet werden und gegebenfalls sogar vollständig auseinander geblättert (exfoliert) werden. Die einzelnen Schichten haben eine Dicke von ca. 1 nm und sind von Polymer umgeben. Das Vorliegen von Nanocompositen in Polymerwerkstoffen ermöglicht es, die daraus hergestellten Polymerprodukte mit neuen und verbesserten Eigenschaften auszustatten. Das Konzept der Nanocomposite auf Basis von Schichtsilikaten wird vor allem im Bereich der Thermoplaste eingesetzt, um deren Eigenschaften z. B. im Hinblick auf die Zugfestigkeit zu verbessern. Für Thermoplaste sind die vier genannten Verfahren zur Herstellung von Nanocompositen anwendbar, wohingegen für Kautschuke die direkte Einlagerung des geschmolzenen Polymers aufgrund der hohen Viskositäten im herkömmlichen Verarbeitungstempraturbereich nicht möglich ist. Die anderen drei Verfahren sind auch für Kautschuk anwendbar, allerdings sind diese Verfahren technologisch sehr aufwendig und immer mit der Verwendung von Lösungsmitteln verbunden, die im weiteren Verlauf der Verarbeitung solcher Nanocomposite z. B. für die Einmischung in eine vulkaniserbare Kautschukmischung wieder i. A. vollständig entfernt werden müssen.

Aus der WO 97/00910 ist es bekannt, einen Latex herzustellen, der Schichtsilikat mit eingelagertem Emulsionspolymer enthält. Für die Herstellung solch eines Latex wird das Schichtsilikat zunächst durch lonenaustausch mit Oniumsalzen organophil ausgebildet und anschließend wird in einer Emulsion ein Kautschuk aus seinen Monomeren in Anwesenheit des organophilen Schichtsilkates in die Schichten des Silikates einpolymerisiert. Dabei bilden sich Nanocomposite aus. Nach der Koagulation und der Trocknung können derartige Nanocomposite in Kautschukmischungen z. B. für Reifeninnengummis mit verringerter Gaspermeabilität verwendet werden.

In der US 5,576,372 ist die Verwendung von Schichtsilikaten in Reifeninnengummis mit verringerter Gaspermeabilität beschrieben, wobei die Schichtsilikate mit einem reaktiven Kautschuk mit positiv geladenen Gruppen versehen werden. Die Schichtsilikate werden dazu mit einer Lösung, die den reaktiven Kautschuk enthält, i. A. einer Lösung mit organischem Lösungsmittel wie Toluol, behandelt. Der reaktive Kautschuk quillt in und zwischen die Schichten. Alle Lösungsmittel müssen im Anschluss vor der weiteren Verarbeitung z. B. der Einmischung in eine Reifeninnengummimischung entfernt werden. Darüber hinaus sind viele organische Lösungsmittel als ökologisch und toxikologisch bedenklich einzustufen.

Speziell behandelte Schichtsilikate für Kautschukmischungen mit verbesserten mechanischen Eigenschaften und verringerter Gasdurchlässigkeit sind auch aus der US 6,103,817 bekannt. Die speziellen Schichtsilikate werden vor der Einmischung in die Kautschukmischung zunächst durch lonenaustausch mit Oniumsalzen organophil ausgebildet und anschließend werden weitere organische Gastmoleküle aus organischem Lösungsmittel oder durch Behandeln des organophilen Schichtsilikates mit den flüssigen Gastmolekülen (bei Substanzen, die einen niedrigen Schmelzpunkt aufweisen) eingebracht/eingequollen, um den Abstand der Schichten im Schichtsilikat zu vergrössern und die Verteilung in der Kautschukmischung zu erleichtern und zu verbessern. Es können ein oder zwei verschiedene Substanzen in das Schichtsilikat eingebracht werden, wobei zumindest eine der Substanzen polare Gruppen aufweisen muss.

Den drei beschriebenen Verfahren ist gemeinsam, dass die Schichtsilikate vor der Einmischung in eine Kautschukmischung mit aufwendigen Verfahren so ausgebildet werden, dass die einzelnen Silikatschichten bereits vor der Einmischung durch Kautschukmoleküle voneinander getrennt werden, so dass Nanocomposite vorliegen.

Auch aus der US 2,531,396 sind Schichtsilikat enthaltende Elastomere und Verfahren zu ihrer Herstellung bekannt. Die modifizierten Schichtsilikate werden einem flüssigen Latex zugesetzt und es wird gemischt, dabei quellen auch hier die Schichtsilikate bekanntermaßen auf und die Kautschukmoleküle aus dem Latex quellen in der dem Fachmann bekannten Weise als Gastmoleküle in die durch die Oniumionen organophil ausgebildeten Schichtsilikate ein.

Aus der US 6,034,164 ist es bekannt, mit Alkylammoniumionen modifizierte Schichtsilikate direkt in eine Kautschukmischung aus zwei speziellen Kautschuken ohne vorherige Einquellung oder Einpolymerisation von Kautschuk oder Gastmolekülen einzumischen. Bei den Kautschuken handelt es sich zum einen um ein nicht-ionisches Polymer mit einem Molekulargewicht > 50000 g/mol und zum anderen um ein nicht-ionisches Polymer, das kompatibel mit dem ersten Polymer ist und dessen Molekulargewicht kleiner ist als das des ersten Polymers. Man erhält durch die während des Mischprozesses auftretenden Kräfte in der Mischung Schichtpakete aus modifiziertem Schichtsilikat mit einer Dicke von mehr als 10 nm. Das vollständige Auseinanderblättern (Exfoliation) soll dabei vermieden werden. Derartige Kautschukmischungen können für die Herstellung von gasundurchlässigen Elastomermembranen, wie z. B. Reifeninnengummis oder Heizbälgen, verwendet werden.

Kautschukmischungen, die für Reifeninnengummis (Hauptaufgabe: Gasundurchlässigkeit) verwendet werden, genügen i. A. nicht den Erfordernissen, die an Kautschukmischungen von Reifenlaufstreifen gestellt werden. So müssen die verwendeten Kautschukmischungen für Reifenlaufstreifen bewirken, dass die Reifen z. B. hinsichtlich Abrieb, Rutschverhalten, Rollwiderstand, Heat build up, Weiterreißfestigkeit und Kälteflexibiliät optimiert werden. Bei Laufstreifen für Rennreifen von z. B. Rennwagen oder Rennkarts wird vor allen Dingen eine hohe Rutschfestigkeit und ein guter Griff bei im Fahrbetrieb vorliegenden Temperaturen gefordert. Diese hohe Rutschfestigkeit kann durch eine Erhöhung des Verlustfaktor tan δ im relevanten Temperaturbereich z. B. durch das Einmischen großer Mengen (> 100 phr) an hoch energiedissipativen Rußen, so genannten Rennrußen, erfolgen. Vorteilhaft ist weiterhin, wenn die Reifen im beim Fahrbetrieb vorliegenden Temperaturbereich eine möglichst niedrige Shorehärte aufweisen.

Der vorliegenden Erfindung liegt nun die Aufgabe zugrunde, eine Kautschukmischung für Reifenlaufstreifen, insbesondere für Laufstreifen von Rennreifen, bereitzustellen, die sich einfach und umweltfreundlicher herstellen lässt und die bei den daraus hergestellten Reifen eine hohe Rutschfestigkeit (hoher Reibungskoeffizient, guter Griff) verbunden mit einer Härteabnahme bei erhöhten Temperaturen bewirkt.

Gelöst wird diese Aufgabe erfindungsgemäß durch die Verwendung von 5 bis 90 phr, bezogen auf 100 Gewichtsteile der gesamten Kautschukkomponenten, zumindest eines Schichtsilikates, welches mit Alkylammoniumionen der allgemeinen Formel ⁺NR₄ modifiziert und frei von weiteren durch vorherige Behandlung eingequollenen oder einpolymerisierten Gastmolekülen ist, um bei mit Schwefel vulkanisierten Kautschukmischungen, die zumindest einen Dienkautschuk, zumindest einen Füllstoff, Weichmacher und weitere übliche Zusatzstoffe enthalten, im Vergleich zu nur mit Ruß gefüllten, vulkanisierten Mischungen die Shorehärte bei 70 °C zu erniedrigen und den Verlustfaktor tan δ zu erhöhen.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise kann durch das Einmischen des mit Alkylammoniumionen modizierten Schichtsilikates, welches keine weiteren durch eine zusätzliche Vorbehandlung eingebrachten Gastmoleküle aufweist, in Kautschukmischungen für Laufstreifen erreicht werden, dass die Vulkanisate im Vergleich zu herkömmlichen Rußmischungen einen deutlichen Anstieg in den Reibungskoeffizienten (korreliert mit tan δ) und damit in der Rutschfestigkeit bei Temperaturen über 0 °C und besonders bei den im Fahrbetrieb in Laufflächen vorliegenden Temperaturen von ca. 40 bis 70 °C zeigen. Dieser Effekt kann mit den angegebenen Mengen an Schichtsilikat erreicht werden. Der Anteil an Füllstoff in der Mischung muss nicht, wie mit Rennrußen üblich, auf hohe Füllgrade von mehr als 100 phr, die mit Nachteilen in anderen Reifeneigenschaften wie Abrieb und Weiterreißwiderstand verbunden sind, erhöht werden.

Gemäß einer vorteilhaften Weiterbildung der Erfindung weist die Kautschukmischung 40 bis 95 phr des Schichtsilikates auf. Mit diesen Dosierungen können die besten Ergebnisse hinsichtlich einer Erhöhung der Rutschfestigkeit erzielt werden.

Als Ausgangsmaterial für die modifizierten Schichtsilikate können alle dem Fachmann bekannten natürlichen und synthetischen Schichtsilikate, die zum lonenaustausch geeignet sind, wie z. B. Montmorillonite, Smektite, Kaolinite und deren Gemische, die z. B. als unterschiedlichste Tonmineralien (z. B. Bentonit und Kaolin) in der Natur auftreten, verwendet werden. Die einzelnen Schichten der verwendeten Schichtsilikate sollten eine Schichtdicke von 0,8 bis 2,0 nm und einen mittleren Durchmesser von 80 bis 800 nm aufweisen. Die kleinen, extrem dünnen Plättchen können optimal in der Kautschukmischung verteilt und dort angebunden werden.

Die Oberfläche der Schichtsilikate ist durch Kationenaustausch mit Alkylammoniumionen der allgemeinen Formel ⁺NR₄ modifiziert, wobei das modifizierte Schichtsilikat einen bevorzugten Kohlenstoffgehalt von 5 bis 50 Gew.-% aufweist. Die R in dem zur Modifizierung verwendeten Alkylammoniumion können gleich oder verschieden sein und ausgewählt sein aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung und substituierten oder unsubstituierten Aryl- und Benzylgruppen, wobei zumindest ein R eine substituierte oder unsubstituierte, gesättigte oder ungesättigte Alkylgruppe mit mehr als 8 Kohlenstoffatomen ist. Dadurch werden Schichtsilikate erzeugt, deren Abstände zwischen den einzelnen Schichten vor einer weiteren Verarbeitung oder Einmischung bei 1,1 bis 5 nm liegen. Besonders bevorzugt ist, wenn für die Kautschukmischung ein Schichtsilikat verwendet wird, das mit einem Dimethyldioctadecylammoniumion modifiziert ist. Derart modifizierte Schichtsilikate haben sich als besonders vorteilhaft bei Erhöhung der Rutschfestigkeit erwiesen.

Die schwefelvernetzbare Kautschukmischung enthält zumindest einen Dienkautschuk. Dienkautschuke sind alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk, synthetischem Polyisopren, Polybutadien und Styrol-Butadien-Copolymer. Diese Dienelastomere lassen sich gut zu der Kautschukmischung verarbeiten und zeigen gute Vulkanisateigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.
Mit Naturkautschuk lässt sich das Verarbeitungsverhalten verbessern und Rohfestigkeit, Konfektionsklebrigkeit, Kerbfestigkeit und Weiterreißfestigkeit der Vulkanisate nehmen zu.

Enthält die Kautschukmischung als Dienkautschuk Polybutadien (BR), kann es sich dabei sowohl um cis-1,4- als auch um vinyl-Polybutadien (40-90 % Vinyl-Anteil) handeln. Bevorzugt ist die Verwendung von cis-1,4-Polybutadien mit einem cis-1,4-Anteil größer 90 %, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt von ca. 10 bis 45 Gew.-% und einem 1,2-Anteil von 10 bis 70 % handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden. E-SBR in Mischungen kann im Vergleich zu S-SBR Verbesserungen bei der Verarbeitung mit sich bringen.

Zusätzlich zu den genannten Dienkautschuken kann die Mischung aber auch noch andere Kautschuktypen, wie z. B. Styrol-lsopren-Butadien-Terpolymer, Butylkautschuk, Halobutylkautschuk, Acrylnitril-Butadien-Kautschuk, hydrierten Acrylnitril-Butadien-Kautschuk, epoxidierten Naturkautschuk, hydroxylierten Naturkautschuk oder Ethylen-Propylen-Dien-Kautschuk (EPDM), enthalten.

Gemäß einer vorteilhaften Weiterbildung der Erfindung enthält die Kautschukmischung zur optimalen Einstellung von Rutschfestigkeit und Härte 2 bis 50 phr zumindest eines Weichmacheröls, wie z. B. Mineralölweichmacher.

Die Kautschukmischung kann außerdem als weiteren Füllstoff 0 bis 85 phr, vorzugsweise 5 bis 50 phr, Ruß enthalten, wobei die Summe aus den Anteilen an Ruß und Schichtsilikat in der Mischung 90 phr nicht übersteigt. Der Zusatz von Ruß bringt verarbeitungstechnische Vorteile und Ruß ist ein preiswerter Füllstoff.

Die Kautschukmischungen können neben Schichtsilikat und Ruß weitere dem Fachmann bekannte Füllstoffe, wie beispielsweise Kieselsäure, Aluminiumoxide, Alumosilicate, Kreide, Stärke, Magnesiumoxid, Titandioxid oder Kautschukgele, enthalten.

Vorteilhafterweise enthält die Kautschukmischung zumindest ein Silan-Kupplungsagens. Das Silan-Kupplungsagens dient zur Anbindung des Schichtsilikates an die umgebenden Kautschukmoleküle. Das Silan-Kupplungsagens reagiert mit den oberflächlichen Silanolgruppen des Schichtsilikates, die nicht mit Alkylammioniumionen belegt sind, während des Mischen des Kautschuks bzw. der Kautschukmischung (in situ). Als Silan-Kupplungsagenzien können dabei alle dem Fachmann für die Verwendung in Kautschukmischungen bekannten Silan-Kupplungsagenzien, die er auch für die Anbindung von Kieselsäure an Kautschuk kennt, verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit dem Polymer eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagens z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid(TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Durch die Zudosierung unterschiedlicher Mengen an Schichtsilikat kann der Grad der Ankopplung des Schichtsilikates an die umgebenden Kautschukmoleküle beeinflusst werden und man kann somit die Intensität des Hystereseverlustes und die Verstärkerwirkung und damit die Rutschfestigkeit über weite Bereiche einstellen.

Des Weiteren kann die Kautschukmischung übliche Zusatzstoffe in üblichen Gewichtsteilen enthalten. Zu diesen Zusatzstoffen zählen z. B. Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel wie z. B. Zinkoxid und Fettsäuren wie Stearinsäure, Wachse und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der Kautschukmischung erfolgt auf herkömmliche Art und Weise in einer oder mehreren Mischstufen. Anschließend wird diese weiterverarbeitet z. B. durch einen Extrusionsvorgang und in die entsprechende Form eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Katuschukmischungsstreifens aufgewickelt werden. Nach der Vulkanisation des Fahrzeugreifens weist der Reifen Vorteile in der Rutschfestigkeit auf, die besonders für Rennreifen eine wichtige Rolle spielt. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von einigen Ausführungsbeispielen, die in der Tabelle 1 zusammengefasst sind, näher erläutert werden, ohne jedoch auf diese Beispiele beschränkt zu sein.

Bei sämtlichen in der Tabelle 1 enthaltenen Mischungsbeispielen sind die angebenen Mengenangaben Gewichtsteile, die auf 100 Gewichtsteile Gesamtkautschuk bezogen sind (phr). Alle Mischungen ließen sich mit dem Fachmann bekannten Verfahren einfach und unproblematisch mischen. Mit V bezeichnete Mischungen dienen als Vergleichsmischungen, sie enthalten Ruß. Mit E sind Mischungen mit der erfindungsgemaßen Verwendung bezeichnet, die ein modifiziertes Schichtsilikat aufweisen. Die Mischungen 1 und 2 unterscheiden sich in den verwendeten Kautschuken.

Die verschiedenen Mischungen wurden bei 160 °C unter Druck über die mittels Rheometerkurven ermittelten optimalen Vulkanisationszeiten zu Prüfkörpern vulkanisiert. Mit diesen Prüfkörpern wurden für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Reißkraft bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0, 30 und 60 °C gemäß DIN 53 513

**Tabelle 1**

| **Bestandteile** | **Einheit** | **V1** | **E1** | **V2** | **E2** |
|---|---|---|---|---|---|
| Naturkautschuk | phr | 60 | 60 | - | - |
| Polybutadien¹ | phr | 40 | 40 | - | - |
| E-SBR² | phr | - | - | 100 | 100 |
| Ruß N220 | phr | 50 | - | 80 | - |
| modifiziertes Schichtsilikat³ | phr | - | 50 | - | 80 |
| aromatisches Öl | phr | 5 | 5 | 40 | 40 |
| Stearinsäure | phr | 2 | 2 | 2 | 2 |
| Zinkoxid | phr | 3 | 3 | 3 | 3 |
| Alterungsschutzmittel | phr | 1 | 1 | 1 | 1 |
| Schwefel | phr | 2 | 2 | 2 | 2 |
| Beschleuniger | phr | 2,5 | 2,5 | 2,5 | 2,5 |

| **Eigenschaften** | | | | | |
|---|---|---|---|---|---|
| Zugfestigkeit | MPa | 20,0 | 9,2 | 15,2 | 3,6 |
| Reißdehnung | % | 406 | 497 | 523 | 559 |
| Spannungswert 100 % | MPa | 2,96 | 2,52 | 1,35 | 1,11 |
| Spannungswert 200 % | MPa | 8,18 | 3,73 | 3,35 | 1,72 |
| Spannungswert 300 % | MPa | 15,04 | 5,35 | 6,83 | 2,35 |
| Reißkraft | N | 31,7 | 21,1 | 27,8 | 10,7 |
| Shorehärte bei RT | Shore A | 67,5 | 66,6 | 53,3 | 42,7 |
| Shorehärte bei 70 °C | Shore A | 65,7 | 47,0 | 51,2 | 27,9 |
| Rückprallelastizität bei RT | % | 58,1 | 43,7 | 47,0 | 17,0 |
| Rückprallelastizität bei 70 °C | % | 64,5 | 38,1 | 60,6 | 29,2 |
| Verlustfaktor tan δ bei 0 °C | - | 0,109 | 0,160 | 0,278 | 0,393 |
| Verlustfaktor tan δ bei 30 °C | - | 0,065 | 0,248 | 0,237 | 0,433 |
| Verlustfaktor tan δ bei 60 °C | - | 0,061 | 0,210 | 0,194 | 0,334 |

| | | | | | |
|---|---|---|---|---|---|
| 1 Ubepol 150, Ube Industries, Japan | | | | | |
| 2 Typ SBR 1500 | | | | | |
| 3 Schichtsilikat Montmorillonit modifiziert mit Dimethyldioctadecylammoniumionen, Kohlenstoffgehalt ca. 30 Gew.-% | | | | | |

Wie aus der Tabelle 1 ersichtlich wird, liegt die Härte der Vulkanisate aus den Mischungen mit dem Schichtsilikat insbesondere bei erhöhter Temperatur unterhalb der der entsprechenden Vulkanisate aus Mischungen mit Ruß. Die Mischungen mit den Schichtsilikat weisen außerdem im Vergleich zu den nur Ruß als Füllstoff enthaltenden Mischungen einen deutlichen Anstieg in den Verlustfaktoren der Vulkanisate bei 0, 30 und 60 °C auf. Ein hoher Verlustfaktor korreliert mit einem hohen Reibungskoeffizienten und dieser ist wiederum ein Maß für die Rutschfestigkeit bzw. den Griff des Reifens auf der Fahrbahn. Die Mischungen mit dem Schichtsilikat bieten sich also für Reifen die eine hohe Griffigkeit benötigen, wie z. B. Rennreifen, besonders an.

Die ermittelten Verlustfaktoren für die Mischungen E1 und E2 liegen in der Größenordnung wie man sie auch für herkömmliche Rennwagenreifen, deren Ausgangsmischungen Anteile von über 100 phr an hoch energiedissipativen Rußen aufweisen, findet. So zeigt z. B. eine typische Rußrennmischung folgende Verlustfaktoren: tan δ (0 °C) = 0,53; tan δ (30 °C) = 0,38; tan δ (60 °C) = 0,30. Die Mischung E2 liegt bei 30 und 60 °C mit ihren Verlustfaktoren sogar noch über diesen Werten.

## Patentansprüche

1. Verwendung von 5 bis 90 phr, bezogen auf 100 Gewichtsteile der gesamten Kautschukkomponenten, zumindest eines Schichtsilikates, welches mit Alkylammoniumionen der allgemeinen Formel ⁺NR₄ modifiziert und frei von weiteren durch vorherige Behandlung eingequollenen oder einpolymerisierten Gastmolekülen ist, um bei mit Schwefel vulkanisierten Kautschukmischungen, die zumindest einen Dienkautschuk, zumindest einen Füllstoff, Weichmacher und weitere übliche Zusatzstoffe enthalten, im Vergleich zu nur mit Ruß gefüllten, vulkanisierten Mischungen die Shorehärte bei 70 °C zu erniedrigen und den Verlustfaktor tan δ zu erhöhen.

2. Verwendung nach Anspruch 1, **dadurch gekennzeichnet, dass** die Kautschukmischung 40 bis 85 phr des Schichtsilikates enthält.

3. Verwendung nach zumindest einem der Ansprüche 1 oder 2, **dadurch gekennzeichnet, dass** die einzelnen Schichten des Schichtsilikats eine Schichtdicke von 0,8 bis 2,0 nm und einen mittleren Durchmesser von 80 bis 800 nm aufweisen.

4. Verwendung nach zumindest einem der Ansprüche 1 bis 3, **dadurch gekennzeichnet, dass** das modifizierte Schichtsilikat einen Kohlenstoffgehalt von 5 bis 50 Gew.-% aufweist.

5. Verwendung nach zumindest einem der Ansprüche 1 bis 4, **dadurch gekennzeichnet, dass** die R in dem Alkylammoniumion gleich oder verschieden sein können und ausgewählt sind aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung und substituierten oder unsubstituierten Aryl- und Benzylgruppen, wobei zumindest ein R eine substituierte oder unsubstituierte, gesättigte oder ungesättigte Alkylgruppe mit mehr als 8 Kohlenstoffatomen ist.

6. Verwendung nach zumindest einem der Ansprüche 1 bis 5, **dadurch gekennzeichnet, dass** das Alkylammoniumion ein Dimethyldioctadecylammoniumion ist.

7. Verwendung nach zumindest einem der Ansprüche 1 bis 6, **dadurch gekennzeichnet, dass** der Dienkautschuk oder die Dienkautschuke ausgewählt ist bzw. sind aus der Gruppe, bestehend aus Naturkautschuk, synthetischem Polyisopren, Polybutadien und Styrol-Butadien-Copolymer.

8. Verwendung nach zumindest einem der Ansprüche 1 bis 7, **dadurch gekennzeichnet, dass** die Kautschukmischung 2 bis 50 phr zumindest eines Weichmacheröles enthält.

9. Verwendung nach zumindest einem der Ansprüche 1 bis 8, **dadurch gekennzeichnet, dass** die Kautschukmischung als weiteren Füllstoff 0 bis 85 phr, vorzugsweise 5 bis 50 phr, Ruß enthält, wobei die Summe aus den Anteilen an Ruß und Schichtsilikat in der Mischung 90 phr nicht übersteigt.

10. Verwendung nach zumindest einem der Ansprüche 1 bis 9, **dadurch gekennzeichnet, dass** die Kautschukmischung zumindest ein Silan-Kupplungsagens enthält.

11. Verwendung nach zumindest einem der Ansprüche 1 bis 10 für zumindest einen Teil des Laufstreifens von Fahrzeugreifen, insbesondere Rennreifen.

## Claims

1. Use of from 5 to 90 phr, based on 100 parts by weight of the entirety of rubber components, of at least one phyllosilicate which has been modified with alkylammonium ions of the general formula ⁺NR₄ and is free from other included molecules incorporated by copolymerization or swelling via previous treatment, in order to lower the Shore hardness at 70°C and to increase the loss factor tan δ in sulphur-vulcanized rubber mixtures in which at least one diene rubber, at least one filler, plasticizer and other conventional additives are present, when comparison is made with vulcanized mixtures filled only with carbon black.

2. Use according to Claim 1, **characterized in that** the rubber mixture comprises from 40 to 85 phr of the phyllosilicate.

3. Use according to at least one of Claims 1 and 2, **characterized in that** the individual layers of the phyllosilicate have a thickness of from 0.8 to 2.0 nm and an average diameter of from 80 to 800 nm.

4. Use according to at least one of Claims 1 to 3, **characterized in that** the modified phyllosilicate has a carbon content of from 5 to 50% by weight.

5. Use according to at least one of Claims 1 to 4, **characterized in that** the R in the alkylammonium ion may be identical or different and have been selected from the group consisting of hydrogen, substituted or unsubstituted, saturated or unsaturated alkyl groups having from 1 to 40 carbon atoms, with or without branching, and substituted or unsubstituted aryl and benzyl groups, where at least one R is a substituted or unsubstituted, saturated or unsaturated alkyl group having more than 8 carbon atoms.

6. Use according to at least one of Claims 1 to 5, **characterized in that** the alkylammonium ion is a dimethyldioctadecylammonium ion.

7. Use according to at least one of Claims 1 to 6, **characterized in that** the diene rubber or the diene rubbers has/have been selected from the group consisting of natural rubber, synthetic polyisoprene, polybutadiene and styrene-butadiene copolymer.

8. Use according to at least one of Claims 1 to 7, **characterized in that** the rubber mixture comprises from 2 to 50 phr of at least one plasticizer oil.

9. Use according to at least one of Claims 1 to 8, **characterized in that** the rubber mixture comprises, as further filler, from 0 to 85 phr, preferably from 5 to 50 phr, of carbon black, the total of the proportions of carbon black and phyllosilicate in the mixture not exceeding 90 phr.

10. Use according to at least one of Claims 1 to 9, **characterized in that** the rubber mixture comprises at least one silane coupling agent.

11. Use according to at least one of Claims 1 to 10 for at least one portion of the tread of vehicle tyres, in particular racing tyres.

## Revendications

1. Utilisation de 5 à 90 phr (% de résine), par rapport à 100 parties en poids de l'ensemble des composants de caoutchouc, d'au moins un silicate lamellaire qui est modifié par des ions alkylammonium de formule générale ⁺NR₄ et est exempt d'autres molécules d'inclusion incorporées ou copolymérisés par un traitement préliminaire, pour abaisser la dureté Shore à 70°C et augmenter le facteur de perte tan δ dans des compositions de caoutchouc vulcanisées au soufre qui contiennent au moins un caoutchouc diène, au moins une charge, un plastifiant et d'autres additifs usuels, par comparaison avec des compositions vulcanisées, chargées seulement avec du noir de carbone.

2. Utilisation selon la revendication 1, **caractérisée en ce que** la composition de caoutchouc contient de 40 à 85 phr du silicate lamellaire.

3. Utilisation selon au moins l'une des revendications 1 et 2, **caractérisée en ce que** les couches individuelles du silicate lamellaire ont une épaisseur de couche de 0,8 à 2,0 nm et un diamètre moyen de 80 à 800 nm.

4. Utilisation selon au moins l'une des revendications 1 à 3, **caractérisée en ce que** le silicate lamellaire modifié présente une teneur en carbone de 5 à 50 % en poids.

5. Utilisation selon au moins l'une des revendications 1 à 4, **caractérisée en ce que** les radicaux R dans l'ion alkylammonium peuvent être identiques ou différents et sont choisis dans l'ensemble constitué par un atome d'hydrogène, des groupes alkyle saturés ou insaturés, substitués ou non substitués, ayant de 1 à 40 atomes de carbone, des groupes aryle et benzyle substitués ou non substitués, avec ou sans ramification, au moins un radical R étant un groupe alkyle saturé ou insaturé, substitué ou non substitué, ayant plus de 8 atomes de carbone.

6. Utilisation selon au moins l'une des revendications 1 à 5, **caractérisée en ce que** l'ion alkylammonium est un ion diméthyldioctadécylammonium.

7. Utilisation selon au moins l'une des revendications 1 à 6, **caractérisée en ce que** le caoutchouc diène ou les caoutchoucs diène est ou sont choisis dans l'ensemble constitué par le caoutchouc naturel, le polyisoprène synthétique, le polybutadiène et un copolymère styrène-butadiène.

8. Utilisation selon au moins l'une des revendications 1 à 7, **caractérisée en ce que** la composition de caoutchouc contient de 2 à 50 phr d'au moins une huile plastifiante.

9. Utilisation selon au moins l'une des revendications 1 à 8, **caractérisée en ce que** la composition de caoutchouc contient comme autre charge 0 à 85 phr, de préférence 5 à 50 phr, de noir de carbone, la somme des proportions de noir de carbone et de silicate lamellaire dans la composition n'excédant pas 90 phr.

10. Utilisation selon au moins l'une des revendications 1 à 9, **caractérisée en ce que** la composition de caoutchouc contient au moins un agent de couplage de silane.

11. Utilisation selon au moins l'une des revendications 1 à 10, pour au moins une partie de la bande de roulement de pneumatiques d'automobiles, en particulier de pneumatiques de course.
